# EUROPEAN PATENT APPLICATION

(11) **EP 3 291 429 A1**
(43) Date of publication of application: **07.03.2018**
(21) Application number: 17001222.3
(22) Date of filing: 18.07.2017
(51) Int. Cl.: H02K 55/02

(54) **SYNCHRONOUS GENERATOR FOR WIND TURBINES**

(30) Priority: 30.08.2016 ES 201600720
(71) Applicant: Gamesa Innovation & Technology, S.L., 31621 Sarriguren (ES)
(72) Inventor: Salvatierra Macua, Carlos Jesus, 31621 Sarriguren (ES); Martinez Fernandez, Elena, 50018 Zaragoza (ES); Granados García, Javier Alberto Jose, 08193 Barcelona (ES); Lopez Lopez, Jose, 08019 Barcelona (ES); Rodriguez Izal, Jose Luis, 31621 Sarriguren (ES)

(57) **Abstract**

This invention relates to a synchronous generator for wind turbines comprising a rotor (20) and a stator (10), wherein the stator (10) comprises a plurality of induction coils (11) of a high-temperature superconducting material arranged to generate a magnetic field. The use of the superconducting stator, instead of a superconducting rotor, allows simplifying the refrigeration system, thus eliminating, for example, the rotating joints for cryogenic gas and the rotating joints for high-purity helium gas.

## Description

### OBJECT OF THE INVENTION

This invention relates to the field of renewable energies and, more specifically, develops a superconducting synchronous generator for wind turbines.

### BACKGROUND OF THE INVENTION

The wind generators, or wind turbines, allow converting the kinetic energy of wind currents into electrical energy, both for local consumption in systems connected to the wind turbine and for general supply through the electric network. In order to perform this energy conversion, most wind generators have a rotor connected to a system of rotating blades that move integrally through a multiplier with said blades. Said rotor has a plurality of magnetic elements, which may be permanent magnets or electrically excited magnets, based, for example, on copper coils or any other electrical conductor. Likewise, the wind turbine also has a fixed stator enveloping the rotor, normally made in laminated iron, and which contains a coil system such that the relative rotation between the rotor and the stator produces a variation of the magnetic flow generated by the rotor which gives rise to an electrical current being induced in the stator coils.

For example, US 2012/133137 A1 discloses a wind generator, wind turbine which connects to a doubly-fed induction generator (DFIG) and a partial energy converter that control the power transmitted to the electric network. According to a second example, US 7,411,309 B2 discloses a control system that allows continuous operation of the DFIG system without disconnection from the electric network via a dynamic adjustment of the rotor current. Nevertheless, the DFIG systems known in the state of the art have a series of limitations in wind generators operating at low speed (typically less than 500 rpm) and high power (typically more than 3 MW), since they generate a high torque.

The need for lighter and smaller wind turbines as well as greater efficiencies has led to consider the direct use of conductors made with superconducting materials without an iron core. This allows increasing the density of magnetic flow beyond the saturation of iron, reducing heat generation in coils transporting more intense currents, avoiding loss by magnetic hysteresis of iron preventing the use of ferromagnetic material as well as reducing the rotation speed, simplifying or eliminating the mechanical rotation speed multiplication system.

On the other hand, the commercial appearance in the state of the art of conductors based on high-temperature superconducting materials (HTS) allows manufacturing superconducting coils that can being affected with induction magnetic fields of more than 4 Tesla at temperatures of more than 30° Kelvin (K) and sufficient heat stability to safely maintain currents with a density of more than 200 A/mm2 without heat dissipation.

Currently, several designs of superconducting generators have been disclosed which intend to simplify the machine by coupling the generator directly to the blade system. These designs typically have a superconducting rotor that generates the induction field and a stator, which may also be superconducting but which is usually made in copper, in which an electromotive force is induced following a similar structure to that of conventional generators. This is the case, for example, of the systems disclosed in EP 2,521,252 B1, WO 2011/080357 A1, US 2014/009014 A1, US 2009/224550 A1 and CN 10,1527,498 A.

The use of superconductors requires systems that achieve the cooling of the superconducting coils at the cryogenic operating temperature as well as efficient extraction of the heat generated during operation. Moreover, the design has to be adapted in order to achieve minimisation of heat entry from the environment to the superconducting coils, which includes, amongst others, suitable thermal insulation, typically via a high vacuum. For example, US 6,768,232 B1 discloses a rotor manufactured with HTS materials for synchronous machines in which the induction field is generated by the rotor. This rotor comprises a heat reserve that maintains a difference of about 10°K between said reserve and the rotor coil.

However, in the aforementioned proposals the superconducting magnetic elements are arranged in a continuously moving element, which complicates the operations of power supply, refrigeration, heat control, monitoring and protection of the superconducting coils. Thus, these systems require, according to their configuration, either rotating joints for the passing of fluid at cryogenic temperatures or rotating joints for gases such as helium, hydrogen, neon or mixtures of cryogenic gases at high pressure and high purity that connect the heads of the cryogenerators to the compressors, thus reducing the reliability and lifetime of the devices associated with such operations, as well as notably increasing their complexity and cost and preventing a hollow shaft generator configuration, since said rotating joints must be installed on the shaft.

There is therefore still a need in the state of the art for a synchronous wind power generation system that overcomes the limitations of magnetic field density of the traditional systems as well as optimising the reliability and simplicity of the remaining elements connected to said system to guarantee proper operation.

### DESCRIPTION OF THE INVENTION

This invention solves the problems described above via a wind power generation system in which the stator comprises a plurality of coils made of a high-temperature superconducting material (HTS), thus achieving an increase in magnetic field density. The use of the superconducting stator, instead of a superconducting rotor, allows simplifying the refrigeration system, thus eliminating, for example, the rotating joints for cryogenic gas and the rotating joints for high-purity helium gas.

A first aspect of the invention discloses a synchronous generator for wind turbines comprising a stator with said HTS material coils. The generator comprises preferably a casing made from steel or any other material that can support the internal structure of the generator, which in turn supports the superconducting stator and the rotor on bearings. The superconducting stator comprises preferably a cryostat in stainless steel or any other material with low gas emission in the vacuum cavity with sufficient structural strength to support the internal devices of the stator, both dynamically and statically. The cryostat, preferably cylindrical and ring-shaped with concentric inner and outer walls, transmits the reaction torque to the casing, being anchored on said casing on the outside and leaving the inner space of the ring free in order to introduce the rotor. Preferably, said rotor may be a conventional rotor with copper coils or in any other superconducting material or alternative conductors with or without a magnetic sheet core, thus eliminating iron in the rotor and making it lighter.

The cryostat defines a cavity in which a vacuum is generated for thermal insulation and in which the superconducting coils are attached. Preferably, the fastening of said superconducting coils is performed by one, two or more support cylinders in a material capable of bearing the stresses on the coils and transmitting the torque along its contour with low thermal conductivity. The coaxial cylinders define an inner space wherein said coils are fastened, supporting the interaction forces between them and with the rotor. In the preferred case of using a single fastening cylinder and a rotor with iron, the anchoring is performed on the inside due to reluctance forces, whereas in the preferred case of using a single fastening cylinder and a rotor without iron, the anchoring is performed on the outside. In high power generators it is preferable to distribute the stresses between two or more support cylinders.

Preferably, the support cylinders of the coils are centred on the cryostat by means of frames that cross them via slots provided on the support cylinders, preventing the rotation of the cylinders and coils. The frames transmit the stresses towards the outer wall of the cryostat, resting on said outer wall, centring the coils and transmitting the torque to inner guides that are axially welded to the inner part of the outer cylinder wall of the cryostat, which in turn transmits it to the casing holding it via anchor points.

Preferably, the support cylinders, together with the coils, are surrounded by two cylindrical screening layers (also called shielding layers), one on the inside and one on the outside. Such layers are preferably implemented in aluminium, copper or any other material with good thermal and electrical conductivity that are kept at an intermediate temperature, and which act as a thermal radiation screening as well as protecting the coils from alternative magnetic fields produced from electrical transients generated by the converter or by the connection to the power transport system. Preferably, the cooling of the two cylindrical layers is performed by liquid nitrogen, kept in a reserve cavity located inside the cryostat. Said reserve cavity is preferably ring-shaped and comprises an access to the outside for filling up with liquid nitrogen. It is worth noting, however, that the cylindrical screening layers may be refrigerated by other liquids or cryogenic gases or by a cryogenerator or by one of the steps of a cryogenerator. The cylindrical screening layers may also be refrigerated by ducts circulating liquid or cryogenic gas when required to make it lighter or for better heat distribution along the entire surface thereof or when recommended for any other reason. Alternatively, any other method known in the state of the art may be used that allows keeping the screen at low temperature, thus mitigating thermal and electromagnetic radiation.

The stator coils are preferably wound on support plates made in a material with good thermal conduction such as copper, for example, in one, two or more layers depending on the width of the superconductor used, with the ability support the mechanical stresses present in the coils originated by their own magnetic field or by their interaction with the currents generated or the iron in the rotor. Said superconductor is chosen preferably from among first or second generation HTS types, magnesium diboride, or any other superconductor that may be safely refrigerated at the required operating temperature.

Preferably, the coils have a slightly smaller angular amplitude than the ratio between the 360° angular corresponding to the entire circumference and the number of poles; as well as a length adapted to the rotor and the space of interaction between the stator and the rotor.

Preferably, the support plates are distributed cylindrically around the support cylinder and may form either a single cylinder or independent sectors. In order to optimise the distance between the coils and the rotor, the plates are more preferably cylinder arcs with a curved surface according to the radius of the cylinder it rests on. Each layer of the coil is wound upon a support plate that rests on the previous coil, forming a new cylindrical surface of a greater radius.

Also, preferably, the coils are refrigerated by conduction via ribbons, braids or copper wires that keep good thermal contact between the support plates of the coils and the low temperature head of at least one cryogenerator installed in the stator. The coils may also be refrigerated using a cryogenic gas or liquid, either using a pipe system in good thermal contact with the coils or generating high vacuum sealed cavities around the coils and with their corresponding wall bushings for connections, inside which would circulate the cryogenic fluid.

Preferably, support cylinders of the coils and the thermal screens surrounding said support cylinders are thermally insulated with multilayer radiation insulation (MLI) or any other means known in the state of the art capable of preventing heat transfer by radiation from the (inner and outer) walls of the cryostat to the coils.

Preferably, the electrical connections, the cryogenerator, the vacuum intakes, the nitrogen or refrigerating medium (liquid and gas) inlets and outlets as well as the power supply connections for the coils and instrumentation are performed via a frontal closing of the cryostat in order to facilitate assembly of the system and minimise the number and length of vacuum joints.

For its part, the rotor comprises a plurality of induction coils, however these induction coils do not require ferromagnetic slots due to the use of HTS material coils in the stator that allow working with greater magnetic field intensities per unit of volume. The encapsulation system of said rotor is simplified since it is not necessary to use ferromagnetic slots. Said rotor comprises preferably a plurality of slip rings and brushes that allow extracting electrical energy from the rotor towards an electric power converter.

Also preferably, and to the use of HTS material coils in the stator, the necessary rotating joints mentioned above for the case of superconducting rotors are eliminated, and therefore the rotor can be hollow. More preferably said hollow shaft is used to provide a "power tube" through it, allowing the passing of hydraulic hoses and electrical wires to energise the different actuation systems for the wind generator blades. Preferable implementations of the invention may comprise torque limiters in the coupling between the generator and the speed multiplier gearbox.

In a second aspect of the invention, we disclose a wind generator comprising a support tower on which a synchronous generator is arranged, connected to a plurality of rotary blades. The synchronous generator has the features described in the first aspect of the invention, that is, it comprises a rotor and a stator, the stator in turn comprising reality of HTS coils arranged in order to generate a magnetic field. The rotor is connected to the rotating blades such that the kinetic energy of the wind makes the wind turbine rotate by propelling its blades, making the rotor rotate by direct coupling or through a multiplier. The relative rotation between the rotor and the stator converts said kinetic energy into electrical energy, which can be locally stored or transmitted over a electric network. Note that the wind turbine of the invention can be implemented with any preferred option and with any feature of the preferred embodiments of the synchronous generator of the invention.

The synchronous generator and wind turbine of the invention thus achieve improvements in the magnetic field flux density and, as a result, of the nominal rating that can be obtained per unit of volume. Moreover, since the critical elements for performing the power conversion are located in the static part of the system, this notably simplifies the implementation of auxiliary systems (cooling, monitoring, power supply, etc.), increasing its reliability and reducing the maintenance requirements and reducing the weight and volume of the system as a whole. Finally, it eliminates the centrifugal and radial forces existing on the superconducting coils when these are mounted on the rotor, reducing the inertia and simplifying the fastening system of said HTS coils. These and other advantages of the invention shall be apparent in the light of the detailed description thereof.

### DESCRIPTION OF THE FIGURES

In order to aid a better understanding of the characteristics of the invention according to a preferred embodiment thereof and in order to complement this description, the following figures are included as an integral part thereof, in an illustrative and not limiting nature.
Figure 1 shows a diagram of a longitudinal section of a particular implementation of the synchronous generator of the invention, as well as the elements connected to it during operation.
Figure 2 shows a particular implementation of the stator encapsulated in a cryostat, including some required auxiliary systems and connections.
Figure 3 shows a longitudinal section of the cryostat containing the stator together with the shaft of the cylinder, according to a particular implementation of the invention.
Figures 4a and 4b illustrate the fastening means of the HTS material coils within the stator through a cross section in one of the central frames (Fig. 4a) and a section at the level of the first frame 155a (Fig. 4b), according to a particular implementation of the synchronous generator of the invention.
Figure 5 shows in detail transverse and longitudinal sections of the cylindrical supports that hold the coils as well as their fitting in the second 155b and first 155a frames corresponding to the central fastening and the last section, according to particular implementations of said elements.
Figure 6 shows in greater detail the geometry of the winding of HTS material, according to a particular implementation of the synchronous generator of the invention.

### PREFERRED EMBODIMENT OF THE INVENTION

Herein, the term "comprises" and its derivatives (such as "comprising", etc.) must not be understood in an exclusive sense, that is, these terms must not be interpreted as excluding the possibility that what is described and defined may include more elements, steps, etc.

In view of this description and figures, a person skilled in the art may understand that the invention has been described according to preferred embodiments thereof, but that multiple variations may be introduced into said preferred embodiments without deviating from the object of the invention as claimed.

Note that any preferred embodiments described are exemplified with a power generator for wind installations of intermediate speed, of around 400 rpm, wherein the magnetic field is produced by an eight pole superconducting system located in the stator. Nevertheless, the invention can be carried out for any other rotational speed and number of poles in the stator.

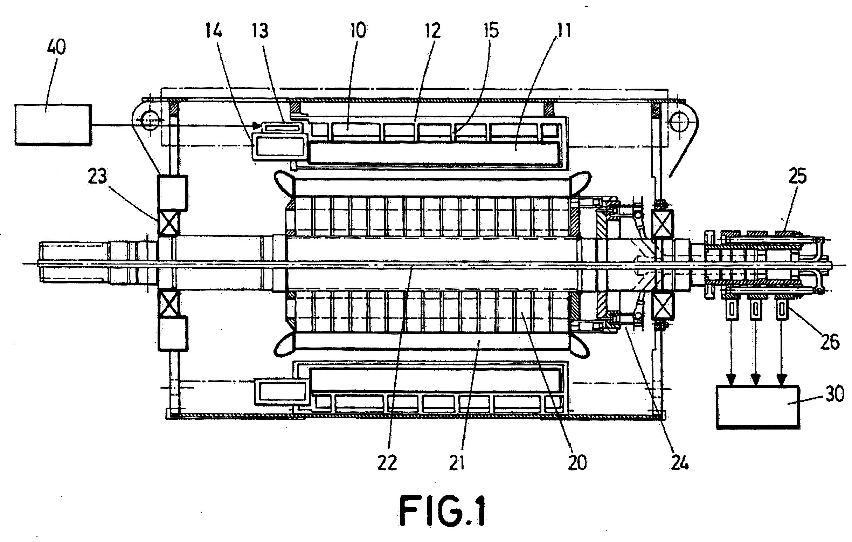

Figure 1 shows a longitudinal section of a particular implementation of the superconducting synchronous generator of the invention, which is in turn integrated into a particular implementation of the wind turbine of the invention. The synchronous generator comprises a stator 10 that coaxially surrounds a rotor 20. The rotor 20 is adapted in order to mechanically connect (integrally or through a multiplier) to the blades of a wind turbine, as well as electrically to an external converter 30 and to a power supply 40. In this invention, the stator 10 acts as an inducing element, whereas the rotor 20 acts as the induced element.
The stator 10 comprises a plurality of induction coils 11 made of HTS material, contained within a cryostat 12. The cryostat 12 is cylindrical in shape with a central hollow, also cylindrical, inside of which is placed the rotor 20. In addition, said cryostat 12 comprises two wall bushings 13 as inlets to provide power to the induction coils 11 from the power supply 40, and static cryogenic cooling means 14 (also called cryogenerator 14 for simplicity) comprising at least one cryogenerator capable of reaching the planned operating temperature (30° K in the example of the embodiment) and a liquid nitrogen circuit with an inlet 131 and an outlet 132. Finally, the stator 10 comprises fastening means 15 that keep the position of the induction coils 11 of HTS material fixed within the cryostat 12. The fastening means 15 transmit the retention torque along the shaft of the cryostat 12 and along its outer periphery, centring the inner elements of the cryostat 12, and contain the reluctance and radial forces of interaction with the induction coils 21 of the rotor 20.
Commercial superconducting ribbons of bismuth oxide BSCCO-2223 embedded in silver, laminated and under annealing process in a controlled atmosphere (first-generation superconducting coils) can be used for the winding of the induction coils 11 of HTS material. Second-generation superconducting coils may also be used, consisting in a previously treated metal sheet on which a biaxial textured layer of only a few microns of a superconducting mixed oxide based on rare earths such as yttrium, barium and copper oxide (Y1Ba2Cu3O7-d, wherein d is a decimal number of around 0.2). Likewise, MgB2 (magnesium diboride) ribbons can be used, embedded in tubes of iron or other metals. Alternatively, any other high-temperature superconducting material may be used as long as the critical temperature is above the operating temperature of the induction coils 11 and that their performance characteristics in electric current in its operating magnetic field conditions allow it to produce a sufficiently intense field, usually of more than 2 T. In the preferred embodiment we have considered the use of commercial second-generation ribbons.
The induction coils 11 allow generating an induced magnetic field, in the region in which the rotor 20 is housed, with as many poles as induction coils 11 and with a greater intensity than can be achieved using the classic systems based on coils of copper or another metal or alloy. When the rotor 20 rotates, it induces a greater electromotive force in the winding of the rotor 20, which generates greater electrical power with less weight and volume and at a lower rotation speed, which allows direct coupling to the wind turbine or a lower multiplication, thus simplifying the wind turbine mechanism. In the preferred embodiment, these coils 11 have been wound on a cylindrical base surface such that without the coil heads blocking the space required to allow inserting the rotor, the distance between the coil and the active part of the rotor is minimised. The space equivalent to the traditional air gap is thus as small as possible. On the other hand, in order to protect the induction coils 11 from transitions to the non-superconducting state induced by eventual transients may start a sudden transition and their possible destruction. The coils may be wound without insulation or introducing metals or other types of conductors between consecutive layers of the winding, via mechanical contact, fusion and impregnation of metals or by any other process to improve electrical and thermal conductivity between the layers. This provides the coils with radial paths for propagation, which leads to a greater robustness of the coils. In the preferred embodiment, the induction coils have been performed by inserting a metal alloy sheet during winding. The greater electric resistance of the interface between the layers leads the current to circulate through the superconductor as if the inter-layer were an electrical insulator.

For its part, the rotor 20 comprises a plurality of induction coils 21 without ferromagnetic slots, distributed coaxially on a hollow shaft 22. In particular implementations, said hollow shaft 22 can be used to provide a "power tube" through it, allowing the passage of hydraulic hoses and electrical wires to allow the action of the different actuation systems of the wind turbine blades that make up the rotation speed control system for the rotor 20 of the wind turbine. The induction coils 21 are wound on the cylindrical surface of the rotor 20, which may be of laminated iron, or more preferably, of an insulating and non-magnetic material that prevents losses due to induction and magnetisation. The induction coils 21 are anchored to the support surface of the rotor 20 with bars of trapezoidal or rectangular section of an insulating and non-magnetic material capable of transferring the heat generated by conducting the current leaving ventilation openings. In the preferred embodiment we use an epoxy matrix G10 fibreglass composite. In the preferred embodiment we have also considered the generation of three-phase current by using arrays of three induction coils 21 dephased 1/3 of the polar arc of 22.5° (8 poles), and therefore 24 coils are overlapped over the 360°. The induction coils 21 are built in an equivalent manner to the induction coils 11 of the stator 10 but, in this case, copper may be used both as flat bars and as copper wire cables, the use of cables with insulated fine wires (Litz wires) being preferred in order to reduce losses to induction. Since the limit of intensity of the magnetic induction achievable in iron due to magnetisation is of about 2T, the contribution of iron in the rotor 20 does not participate sufficiently towards facilitating the decrease in the excitation current for the induction coils 11 as to offset the enormous increase of losses due to magnetisation of iron and the increased weight in the rotor 20.

The rotor 20 comprises on its coupling side a bearing 23, as well as an electric connection 24 on its opposite end. Also on said end opposite the coupling, the rotor 20 comprises a plurality of slip rings 25 and brushes 26 that extract energy towards the converter 30, similarly to those used in generators with the DFIG system.

The superconducting induction coils 11 can be cooled to the cryogenic operating temperature using the different methods in existence, for example and not exclusively, by thermally connecting the induction coils 11 to the cold finger of the cryogenerators 14 via a material with high thermal conductivity (for example copper), or by circulating cryogenic fluid in good thermal contact with the superconducting induction coils 11. In order to decrease the heat from the environment towards the induction coils 11, anti-radiation screens (for example in aluminium) can be used which may be cooled to an intermediate temperature between the environmental temperature and that of the induction coils 11, using some of the different means in existence (for example, via cryogenerators, liquid nitrogen or cold gas). Moreover, in order to decrease the heat entering by radiation towards the screens and the induction coils 11, a multilayer reflecting material can be used (multi-layer insulation, MLI). These screens also perform the function of protecting the superconducting coils from the influence of electromagnetic transients induced by the current circulating through the rotor winding due to the regulation process, generally commuted to frequencies of several kilohertz.

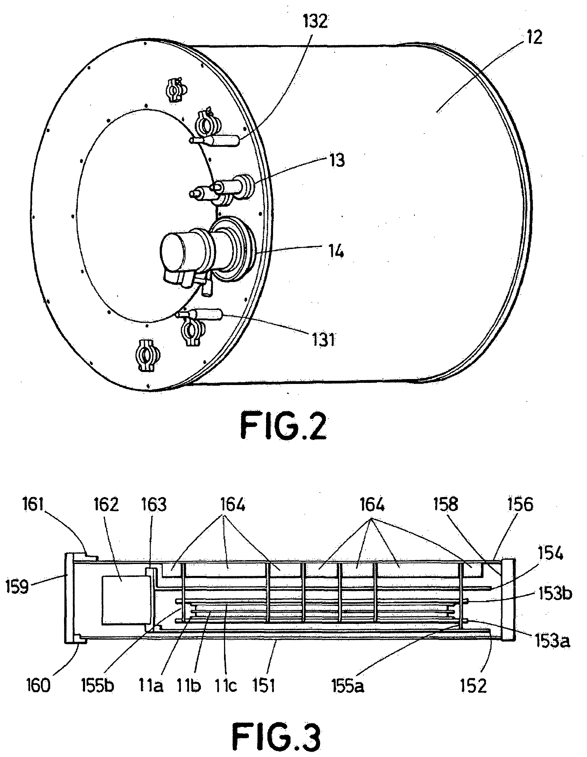

Figure 2 shows with greater detail a particular implementation of the cryostat 12 that confines inside it the induction coils 11 of HTS material. The wall bushings 13 are incorporated in one of the wall bushings 13 in order to energise the induction coils 11 and a cryogenerator 14 that cools the induction coils 11. Figure 2 shows the simplest-example that only uses a cryogenerator 14. However, other embodiments may comprise a number N+1 of cryogenerators 14 to favour repair and maintenance operations, where N is the minimum number required to cool the superconducting induction coils 11 to their operating temperature. In this particular example of the invention, the induction coils 11 are cooled by thermal conduction to the cold collecting element of the cryogenerator 14, and a flow of liquid nitrogen, with input 131 and output 132, allows cooling the first aluminium screen 152 and the second aluminium screen 154, the connections of the coils with the copper connections that feed them, as well as accelerating the cooling process of the cryogenic assembly.

Figure 3 shows a longitudinal section of the stator assembly of the preferred embodiment, showing only the generatrix plane of the cylinder. The Figure shows the inner 151 and outer 156 cylindrical walls of the cylinder made in non-magnetic stainless steel sheet or in any other non-magnetic material capable of maintaining the vacuum in the region comprised between the two cylindrical walls and supporting the stresses produced by the outer atmospheric pressure and the torsion generated by the reaction resistance torque in the induction coils 11. The material used may be an electrical conductor but its conductivity must be regulated in order to control losses caused by the currents induced on the inner wall 151 by variations in the magnetic field caused by the currents induced in the rotor 20. The outer wall 156 must be capable of supporting the radial and peripheral stresses required to contain the reaction torque that appears due to the interaction with the currents generated in the rotor 20. In the preferred embodiment we have used a thickness that is greater than that of the inner wall 151 that essentially supports the atmospheric pressure acting upon it and that does not have a direct anchoring except for the lids of the vacuum enclosure.
The gap existing between the two concentric inner cylindrical walls 151 and 156 is closed by the first ring-shaped lid 158, preferably made in non-magnetic stainless steel, which is welded to the walls described using a vacuum-proof welding; and the second ring-shaped lid 159 of an equal or similar material to that of the first ring-shaped lid 158, which is fixed via welding or removable fastening means with vacuum joints or fixed to the flanges 160 and 161 which, in turn, are vacuum-proof welded or joined to the inner walls 151 and 156 respectively.

Fastened to the second ring-shaped lid 159 are the cryogenerator 14, the wall bushings 13 for connecting the induction coils 11, the inlet and outlet tubes of the liquid nitrogen cooling circuit and four vacuum flanges for connecting the vacuum pumps, the connection terminals of the measurement components for measuring inner temperatures, the magnetic field in the induction coils 11 and the voltages in the several induction coils 11 as well as the safety pressure relief valve and the pressure sensor or vacuum gauge that allows knowing the state of the thermal insulation vacuum.
Axially fastened to the second ring-shaped lid 159 using composite G10 fibreglass blocks or any other material with good mechanical strength and low thermal conductivity and capable of supporting large variations in temperature, and flexibly connected to the liquid nitrogen and inlets is provided a ring-shaped reservoir 162 that holds liquid nitrogen at atmospheric pressure and temperature of 77°K. This cold reservoir is made in non-magnetic stainless steel and capable of supporting low temperatures such as AISI 316L or AISI 304, or in any other suitable material for performing mechanical structures are very low temperature and maintaining a vacuum-resistant seal without offering a relevant magnetic susceptibility. The reservoir is joined laterally to a ring 163 in aluminium or any other material that is a good thermal conductor at a temperature or 77°K, and preferably lightweight. The connection between the reservoir 162 and the ring 163 must have good thermal conductivity such that the liquid nitrogen contained in the reservoir 162 may absorb the heat transmitted through the first aluminium screen 152 and the second aluminium screen 154 anchored in turn to the ring 163 that acts as a thermal and mechanical means of adaptation to the deposit 162.
The thermal radiation screens (first aluminium screen 152 and 156) establish an intermediate temperature between the environmental temperature outside the cryostat 12 and the low temperature of the induction coils 11 that is preferably established at a value of less than 30°K. This significantly decreases heat transmission towards the induction coils 11, both by conduction through the supports and the power supply cables for the induction coils 11, and by radiation. Especially, the high electrical conductivity of the first aluminium screen 152 at a temperature of 77°K insulates the superconducting components from transient disturbances in the magnetic field. The assembly formed by the reservoir 162, the ring 163, the first aluminium screen 152 and 156 are enveloped with MLI multi-layer reflective radiation thermal insulation also known as superinsulation.
The second aluminium screen 154 is held by the second frames 155b that are fixed onto the wall 156 only via anchor guides and due to their ring shape via transversally carved slots in which fit said second frames 155b, on their free end it is fixed via the first frames 155a, which have an extension aimed at fixing the first aluminium screen 152. This last screen is only fixed by the end of the first frames 155a and by its connection to the reservoir 162 via the ring 163. This notably reduces the thermal load on the screens and thus reduces nitrogen consumption.
Alternatively, the nitrogen deposit may be replaced by an equivalent with any other cryogenic gas or fluid or by a connection to the first step of a two-stage cryogenerator 14, the second stage remaining to extract the heat from the induction coils 11 at a lower temperature. The use of two heat levels, either via liquid nitrogen or any other alternative means, allows greater efficiency of the system since the cooling efficiency at the intermediate temperature is a lot greater than that corresponding to the temperature of the induction coils 11.
The electrical connections between the superconducting material and the conventional conductor that goes to the outside via the wall bushings 13 are fixed on the ring 163. This is possible as long as the superconductor has the capacity of working safely at the intermediate temperature. In the case of not using second-generation or first-generation ribbons the connection must be made at a lower temperature, which increases the need of cooling at the lower temperature with the subsequent requirement of more powerful cryogenerator systems.
Between the first aluminium screen 152 and the second aluminium screen 154 are placed one, two or more cylinders of great mechanical torsional strength, the preferred embodiment uses two cylinders of epoxy composite with G10 fibreglass. Figure 3 shows the case of the use of two support cylinders (a first cylinder 153a and a second cylinder 153b). The first cylinder 153a and the second cylinder 153b have slots aligned with those existing in the second aluminium screen 154, through which cross the first frames 155a and the second frames 115b which centre the cylinders and transmit the resistant torque towards the wall 156 of the cryostat 12 that acts as the transmitter element for the torque.
Between the first cylinder 153a and the second cylinder 153b, and fastened to said support cylinders, are fixed the induction coils 11 via the same second frames 155b and via the support plates 11 a, 11 b and 11c. Screws or bolts or any other alternative fastening means known in the state of the art may be used.

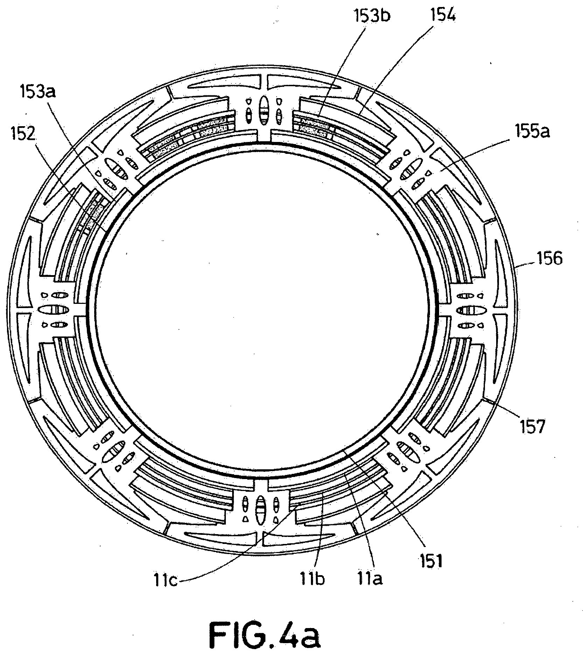

Figure 4a shows a cross section of the stator 10 at the level of one of the planes of the second frames 155b that cross the central part of the induction coils 11. The Figure shows the crossing of the second frames 155b with the concentric cylinders formed by the support plates 11 a, 11b and 11c, the second aluminium screen 154, the first cylinder 153a and the second cylinder 153b; which integrate the different internal components of the cryostat 12 with the exception of the first aluminium screen 152. The section of the second frames 155b, staggered, fixes each of the cylinders, centring and blocking their rotation such that the resistant torque is transmitted to the periphery of each set of second frames 155b. Between each two second frames 155b there are grooves that fit with guides 157 welded onto the external wall of the cryostat 12. The design of the second frames 155b achieves high mechanical strength by transferring the stresses towards the 157 with the greatest range and the smallest section, minimising the transmission of external heat. In order to reduce the thermal load on the low temperature region in which the induction coils 11 are located, the second frames 155b are cooled by contact with the second aluminium screen 154, to which it should be fixed to prevent mechanical fatigue. Note that for clarity we have only shown two induction coils 11.

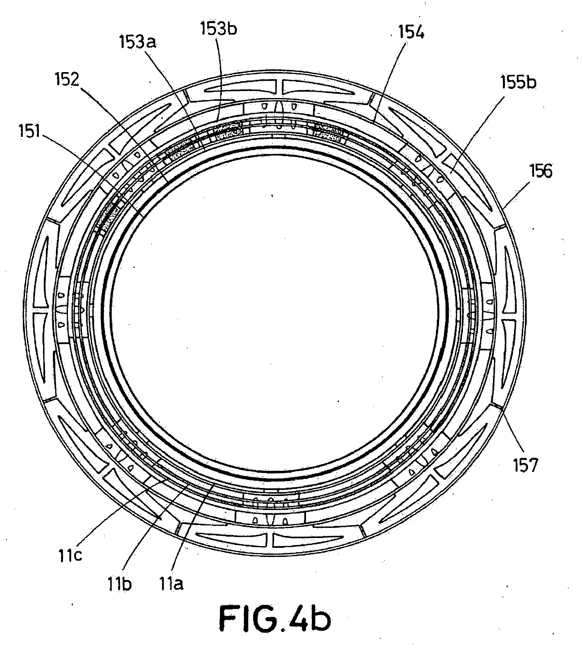

Figure 4b shows the cross section in the position corresponding to the first frames 155a. In contrast to that shown in Figure 4a, the first frames 155a cross the first cylinder 153a to reach the surface of the first aluminium screen 152. Thus, the screen is radially fastened by both ends, via the group of the first frames 155a and by its fastening to the ring 163, achieving great stability to the screen with minimum thermal contact. Again, note that for clarity we have only shown two induction coils 11.

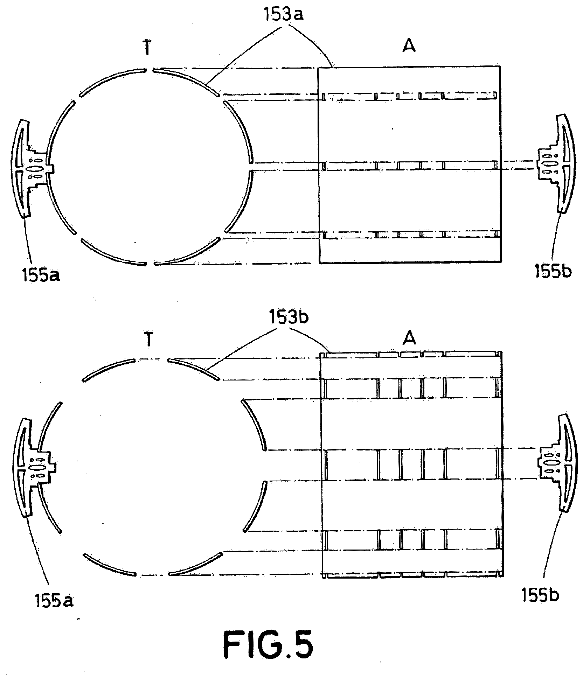

Figure 5 shows in detail the insertion of the first frames 155a and second frames 155b through the fastening slots of the first cylinder 153a and the second cylinder 153b.

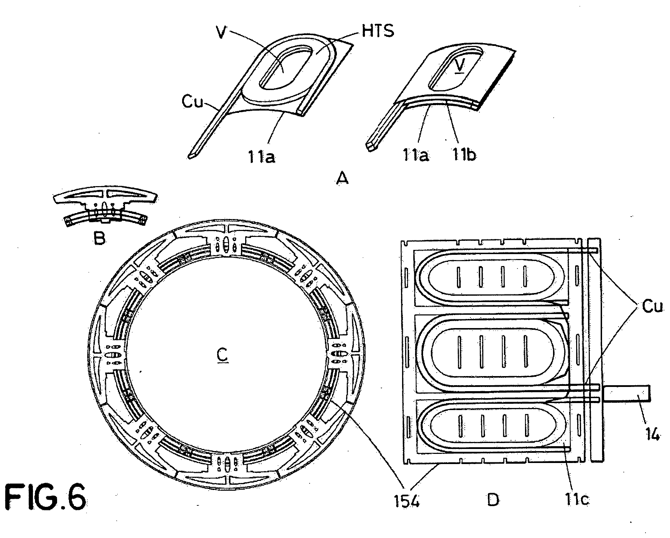

Finally, Figure 6 shows in greater detail the architecture of the induction coils 11. Each pole may have several induction coils 11 stacked in layers the number of which would correspond to the operating conditions, the power and the size of the generator. Each layer is wound upon a support sheet 11 a, 11 b, 11c of copper or a material of high thermal conductivity and which is previously conformed with suitable dimensions and curvature. In the example shown, the number of layers is two per pole and the number of support plates 11 a, 11 b, 11c is equal to the number of layers + 1 since all layers lie between two support plates 11 a, 11 b, 11c. The curvature of the plates depends on the effective radius corresponding to its position, being greater in the internal layers, of smaller radius, and smaller on the outer layers of greater radius. All the support plates 11 a, 11 b, 11c cover the same angular opening and therefore their size changes according to the radius corresponding to their position. Figure a shows a layer covering an angular opening slightly less than 45° when considering an 8 pole architecture. The sheet is emptied from the bottom (V) leaving a space for its fastening to the support cylinders and transmission of the torque via the central second frames 155b the number of which still depend on the size and the torque they must have and support in the specific embodiment. The second frames 155b fit in the hollow V. Likewise, the hollow V has the same size in all layers, since the sides of the second frames 155b are parallel.
In the preferred embodiment, the cooling of the induction coils 11 is made by conduction via a set of copper (Cu) sheets shown in Figures 6A and 6D. The copper sheets have high thermal conductivity, and when stacked adhere on the edges to the support plates 11 a, 11 b, 11c, allowing surrounding the coil via the bundle of stacked sheets. Said bundle of stacked sheets remains at low temperature (preferably less than 30°K), thus achieving a large contact surface for heat transfer. A specific epoxy resin for vacuum work and low temperatures can be used to fasten the sheets. The thermal conductivity of the resin must be as high as possible. The flexibility granted by the coupling via sheets or braids allows protecting the induction coils 11 from the vibrations that are inevitably produced during operation of the generator. In the case of using gas or another cryogenic fluid, the induction coils 11 are hermetically enclosed between the support plates 11 a, 11 b, 11c, and the heat transfer sheets can be replaced by tubes circulating the cryogenic fluid. In the particular example presented, the copper (Cu) sheets are extended on one end to contact with the cold head of the cryogenerator 14. In order to distribute the cooling of all the induction coils 11, a copper ring can be used to which the cryogenerator 14 and the sheets are connected.
In the preferred embodiment described, the induction coils 11 of consecutive layers of a single pole are connected in series via welding in tin, copper and silver alloy; tin, lead and silver; or any other alloy of low fusing temperature; via transverse superconducting ribbons. Alternatively, the winding of the second layer can be made with undivided ribbon, continuously forming a stack of two layers.
In the preferred embodiment described, the induction coils 11 are connected in series, as shown in Figure 6D, such that the sense of rotation of the current between the induction coils 11 of consecutive poles is inverted. The connection between the induction coils 11 is performed via the superconducting ribbons of the induction coils 11, to which one or two ribbons of the same type are welded in order to reduce the effective current density and reduce the risk of an accidental transition to the non-superconducting state. The assembly of two or three HTS ribbons is stabilised with copper sheets in order to transmit the heat generated in the ribbons.
The terminations of the series of induction coils 11 is connected to copper braids from the wall bushings 13 in a contact with a thermal anchor to the reservoir at an intermediate temperature that must be sufficiently low as for the superconducting cable formed by the superconducting ribbons and the connection stabilising copper to transport in a superconducting state the current necessary for operation of the induction coils 11.

Note that the invention developed is based on a system developed in the framework of the Retos Colaboración project RTC-2014-1740-3.

## Claims

1. A synchronous generator for wind turbines comprising a rotor (20) and a stator (10) **characterised in that** the stator (10) comprises a plurality of induction coils (11) made of a high-temperature superconducting material arranged to generate a magnetic field.

2. A synchronous generator according to claim 1 **characterised in that** the plurality of induction coils (11) made of high-temperature superconducting material are distributed and adapted to it on a cylindrical surface that is coaxial to the rotor (20).

3. A synchronous generator according to claims 1 and 2 **characterised in that** the superconducting coils wound upon the cylindrical surface do not use electrical insulation material between winding layers and use metal or metal alloy sheets or wires thus improving their mechanical properties and thermal stability.

4. A synchronous generator according to any of the previous claims **characterised in that** the high-temperature superconducting material is selected from the first-generation and second-generation HTS types, magnesium diboride or any other, whether in the form of a ribbon, wire or braid that is capable of carrying high critical currents in the presence of high flux density magnetic fields at intermediate cryogenic temperatures between 20 and 70°K.

5. A synchronous generator according to any of claims 1-3 **characterised in that** the rotor (20) is a rotor with a copper winding or of any other suitable metal or alloy for making coils.

6. A synchronous generator according to any of claims 1-4 **characterised in that** the stator (10) comprises static means of cryogenic cooling (14).

7. A synchronous generator according to any of claims 1-4 **characterised in that** the stator (10) comprises cooling means by conduction selected from hubs, ribbon braids or copper wires.

8. A synchronous generator according to any of claims 1-6 **characterised in that** the stator (10) comprises at least one support cylinder (153a, 153b) that fixes the plurality of induction coils (11) to a cylindrical cryostat (12).

9. A synchronous generator according to claim 7 **characterised in that** the support cylinders (153a, 153b) are fixed to the cryostat (12) via frames (155a, 155b) crossing slots made in said support cylinders (153a, 153b), being fastened to them and to the cryostat until preventing their mobility, and transmitting the torque of the induction coils (11) to the cryostat (12) with an optimised and homogeneous heat inlet towards said induction coils (11).

10. A synchronous generator according to any of claims 1-8 **characterised in that** the stator (10) comprises a first thermal insulation screen (152) and a second thermal and magnetic insulation screen (154).

11. A synchronous generator according to any of claims 1-9 **characterised in that** the rotor (20) comprises a plurality of slip rings (25) and brushes (26) connected to a frequency converter (30).

12. A synchronous generator according to any of claims 1-10 **characterised in that** the rotor (20) comprises a plurality of induction coils (21) without ferromagnetic slots.

13. A synchronous generator according to any of claims 1-11 **characterised in that** the rotor (20) comprises a hollow shaft (22).

14. A synchronous generator according to claim 12 **characterised in that** the hollow shaft (22) of the rotor (20) is configured to mount a tube for passing energy.

15. A synchronous generator according to any of the previous claims **characterised in that** the rotor (20) comprises torque limitations.

16. A wind turbine comprising a support tower and a plurality of rotary blades, **characterised in that** it also comprises a synchronous generator according to any of claims 1 to 14, said synchronous generator being arranged on the support tower and having a rotor (20) of the synchronous generator connected to said rotary blades, either integrally or via a multiplier.
